# FASCICULE DE BREVET EUROPEEN

(11) **EP 4 548 141 B1**
(45) Date de publication et mention de la délivrance du brevet: **02.09.2026**
(21) Numéro de dépôt: 24745482.0
(22) Date de dépôt: 08.07.2024
(51) Int. Cl.: G02B 7/183, G02B 7/182, B64G 1/22, B64G 1/66, G02B 23/20

(54) **DISPOSITIF D'AJUSTEMENT DE POSITION À RÉDUCTION CINÉMATIQUE**
POSITIONSEINSTELLUNGSVORRICHTUNG MIT KINEMATISCHER REDUKTION
POSITION ADJUSTMENT DEVICE HAVING KINEMATIC REDUCTION

(30) Priorité: 13.07.2023 FR 2307261
(43) Date de publication de la demande: 07.05.2025
(73) Titulaire: Airbus Defence and Space SAS, 31402 Toulouse Cedex 4 (FR)
(72) Inventeur: RENAUD, Mathilde, 31402 TOULOUSE CEDEX 4 (FR)
(74) Mandataire: Plasseraud IP
(86) Numéro de dépôt international: PCT/FR2024/050925
(87) Numéro de publication internationale: WO 2025/012560

(56) Documents cités:
- EP-A2- 2 927 725
- FR-A1- 3 047 614
- US-A- 5 969 892
- US-A1- 2008 290 221

## Description

### Domaine technique

La présente divulgation concerne un dispositif d'ajustement de la position d'un équipement, en particulier d'un équipement spatial tel qu'un miroir d'un télescope, un prisme ou une antenne radiofréquence.

### Technique antérieure

Pour pouvoir ajuster finement la position d'un équipement, par exemple pour pouvoir orienter avec une grande précision un télescope spatial, il est connu d'utiliser des mécanismes comprenant un actionneur, et un étage de réduction du mouvement généré par l'actionneur. L'étage de réduction permet d'apporter un rapport de réduction cinématique important entre un mouvement en entrée, généré par le moteur ou un motoréducteur, et un mouvement de translation en sortie, qui est relié à l'équipement et permet donc d'orienter cet équipement.

On connaît par exemple du document US 5,969,892, et de la publication de Robert M. Warden, « Cryogenic Nano-Actuator for JWST », dans Proceedings of the 38th Aerospace Mechanisms Symposium, Langley Research Center, May 17-19,2006, un dispositif permettant d'ajuster la position d'un instrument, comprenant des parois latérales dont une portion intermédiaire est affinée, et reliée à une paroi transversale dont une portion médiane affinée est connectée à l'actionneur, et donc déplacée en translation par le mouvement de translation généré par l'actionneur. Une deuxième paroi transversale, superposée à la première, est reliée aux extrémités supérieures des parois latérales, et également reliée à l'instrument. La déformation de la paroi transversale sous l'effet de la translation de sa portion médiane induit une déformation des parois latérales, et par suite un déplacement de la deuxième paroi transversale, et donc de l'instrument, avec un rapport de réduction entre le déplacement de la deuxième paroi transversale par rapport au déplacement de la première paroi transversale.

Cet équipement permet d'obtenir une résolution très fine, la résolution étant définie comme la translation de l'instrument pour un pas du moteur pas à pas de l'actionneur, puisque cette résolution est de 7 nm par pas de moteur. Cependant, la course permise par ce dispositif est limitée puisqu'elle n'est que de 10 µm, la course étant définie comme la distance maximale parcourue par l'instrument au niveau de la deuxième paroi transversale.

On connaît également du document de E. Urgoiti et al. « Gaia M2M Positioning Mechanism » un dispositif permettant d'ajustement le positionnement d'un miroir secondaire du télescope GAIA, comprenant également une structure de lames flexibles dont une lame est entrainée en translation par un actionneur, en étant reliée à une lame opposée par des lames latérales flexibles, entrainant ainsi en translation la lame opposée reliée à l'instrument. Ce dispositif présente une résolution de 0,2µm et une course de 400µm. On connaît également du document FR3047614 un mécanisme comprenant un socle, un mobile, et trois chaînes cinématiques interposées entre le socle et le mobile, chaque chaîne comprenant un bras et un avant-bras reliés par un dispositif d'articulation permettant des rotations selon trois axes, et où le bras est relié au socle par l'intermédiaire d'un actionneur rotatif.

Or, certaines applications requièrent des performances supérieures en termes de résolution et de course, à savoir une résolution de l'ordre du nanomètre, et en tout état de cause inférieure à 30 nm, avec en outre une course de plusieurs centaines de microns. Les dispositifs présentés ci-avant n'apportent pas satisfaction vis-à-vis de ces contraintes.

### Résumé

La présente divulgation vient améliorer la situation.

En particulier, un but de la présente divulgation est de proposer un dispositif présentant une résolution inférieure à 30 nm et une course de plusieurs centaines de microns.

Un autre but de la présente divulgation est de proposer un dispositif dont le comportement cinématique est invariant en fonction de la température.

Un autre but de la présente divulgation est de proposer un dispositif robuste, capable de tenir des efforts importants notamment pour des applications spatiales dans lequel le dispositif fait l'objet d'un lancement dans l'espace.

A cet égard, il est proposé un dispositif d'ajustement en position adapté pour un équipement spatial, comprenant :
- un actionneur fixé sur un bâti de support adapté pour générer un déplacement en translation selon un axe central, et
- un étage de réduction cinématique fixé au bâti et comprenant une première interface de jonction à l'équipement,
caractérisé en ce que l'étage de réduction cinématique comprend :
- deux bras en entrée de l'étage de réduction articulés l'un avec l'autre au niveau d'une deuxième interface de jonction avec l'actionneur, les deux bras en entrée de l'étage de réduction formant entre eux un angle obtus,
- deux bras latéraux externes articulés d'une part avec le bâti et d'autre part avec les deux bras en entrée de l'étage de réduction et
- deux bras latéraux internes articulés d'une part aux jonctions entre les bras latéraux externes et les bras en entrée de l'étage de réduction et d'autre part avec un bras d'interface disposé transversalement à l'axe central pour former la première interface de jonction à l'équipement, chaque bras latéral interne formant un angle aigu avec un des bras en entrée de l'étage de réduction et avec un des bras latéraux externes,
l'étage de réduction cinématique étant dimensionné de sorte qu'un déplacement de la deuxième interface de jonction avec l'actionneur selon l'axe central, dans un sens et selon une amplitude provoque un déplacement du bras d'interface selon l'axe central, dans le même sens et selon ladite amplitude réduite d'un rapport de réduction qui est fonction des longueurs relatives des bras appartenant à l'étage de réduction cinématique.

Dans des modes de réalisation, les bras en entrée de l'étage de réduction et les bras latéraux externes forment un profil en M.

Dans des modes de réalisation, la projection, sur l'axe central, des articulations des bras latéraux externes avec le bâti est disposée entre d'une part la deuxième interface de jonction avec l'actionneur et d'autre part une portion centrale du bras d'interface.

Dans des modes de réalisation, lorsqu'on considère la projection, sur l'axe central, des articulations des bras latéraux externes avec le bâti, une distance prise entre cette projection et la deuxième interface de jonction avec l'actionneur est supérieure à deux fois une distance prise entre cette projection et la portion centrale du bras d'interface.

Dans des modes de réalisation, les bras, appartenant à l'étage de réduction cinématique, qui se terminent par des articulations, sont constitués chacun par une lame dont des portions à ses deux extrémités présentent une épaisseur réduite.

Dans des modes de réalisation, l'étage de réduction cinématique présente un plan de symétrie, l'axe central étant disposé dans ce plan de symétrie.

Dans des modes de réalisation, les bras latéraux internes sont inclinés par rapport à l'axe central, de façon à ce que leur extrémité reliée au bras d'interface soit plus proche de l'axe central que leur extrémité reliée à la jonction entre un des bras latéraux externes et un des bras en entrée de l'étage de réduction.

Dans des modes de réalisation, la longueur des bras latéraux externes est strictement inférieure à la longueur des bras latéraux internes.

Dans des modes de réalisation, le bras d'interface est en outre relié au bâti par une lame flexible s'étendant perpendiculairement au bras d'interface et perpendiculairement à l'axe central.

Dans des modes de réalisation, les bras latéraux internes, le bras d'interface, les bras latéraux externes et les bras en entrée de l'étage de réduction sont mono matériau.

Dans des modes de réalisation, le dispositif comprend en outre un équipement de maintien et de libération adapté pour maintenir temporairement le bras d'interface ou les bras latéraux externes.

Selon un autre objet, il est également décrit un ensemble, comprenant au moins un équipement spatial optique ou radiofréquence et au moins trois dispositifs selon la description qui précède, pour un ajustement de la position, en au moins trois points, de chaque équipement spatial.

Dans des modes de réalisation, l'équipement spatial est un équipement optique se présentant sous la forme d'un prisme ou d'un miroir.

Dans des modes de réalisation, l'équipement spatial est un équipement radiofréquence se présentant sous la forme d'une antenne.

Avantageusement, la cinématique du dispositif selon la présente divulgation permet d'atteindre des performances élevées à la fois en termes de résolution et de course.

De plus, selon un autre avantage de l'invention, la configuration symétrique du dispositif selon l'invention et la possibilité de réaliser un dispositif mono-matériau permet d'obtenir un comportement invariant à la température car permettant de conserver un rapport de réduction sensiblement inchangé.

Avantageusement encore, le dispositif selon l'invention présente une grande rigidité selon l'axe d'actionnement.

Dans des modes de réalisation, encore selon un autre avantage, la lame inférieure du dispositif, qui est reliée à l'équipement à positionner, peut être également reliée au bâti-support du dispositif par une lame latérale flexible, permettant de reprendre les efforts orientés dans une direction perpendiculaire à la direction de déplacement et perpendiculaire à la direction de cette lame. Une telle lame latérale est utile pour reprendre les efforts latéraux durant le lancement et ainsi protéger l'équipement. La lame améliore également la rigidité transverse.

### Brève description des dessins

D'autres caractéristiques, détails et avantages apparaîtront à la lecture de la description détaillée ci-après, et à l'analyse des dessins annexés, sur lesquels :
Fig. 1

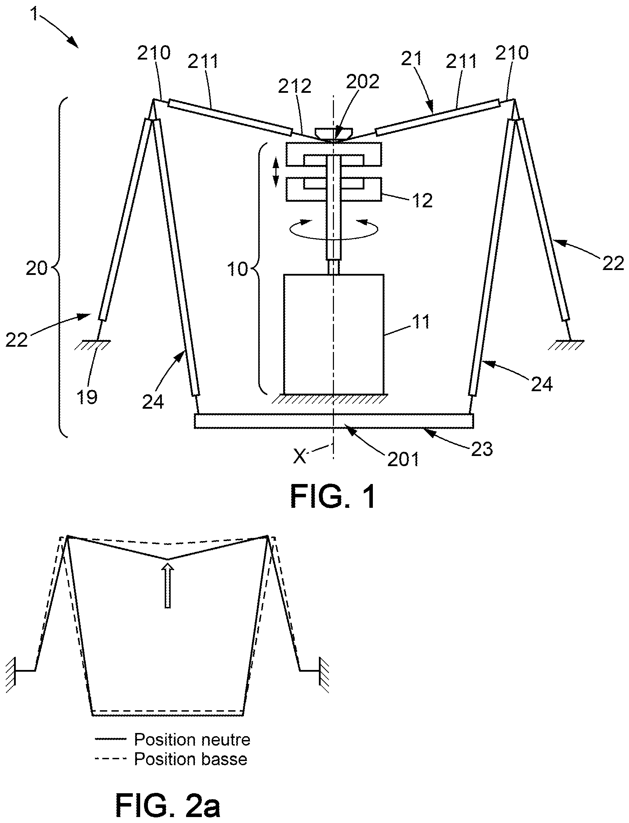

   [Fig. 1] représente schématiquement, en vue de face, un dispositif d'ajustement du positionnement d'un équipement selon un mode de réalisation.
**Fig. 2a**
   [Fig. 2a] représente schématiquement, en vue de face, une translation de l'équipement dans un premier sens.
**Fig. 2b**

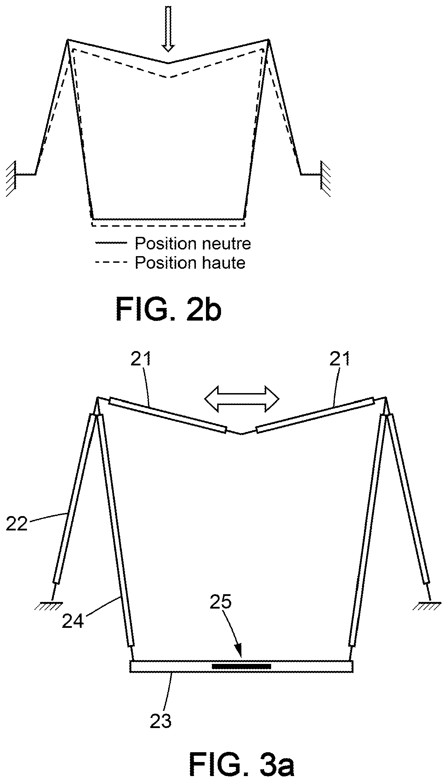

   [Fig. 2b] représente schématiquement, en vue de face, une translation de l'équipement dans un deuxième sens.
**Fig. 3a**
   [Fig. 3a] représente schématiquement une vue de face d'un dispositif d'ajustement du positionnement d'un équipement selon un mode de réalisation dans lequel le dispositif comprend une lame latérale reliant la lame inférieure au bâti-support.
**Fig. 3b**

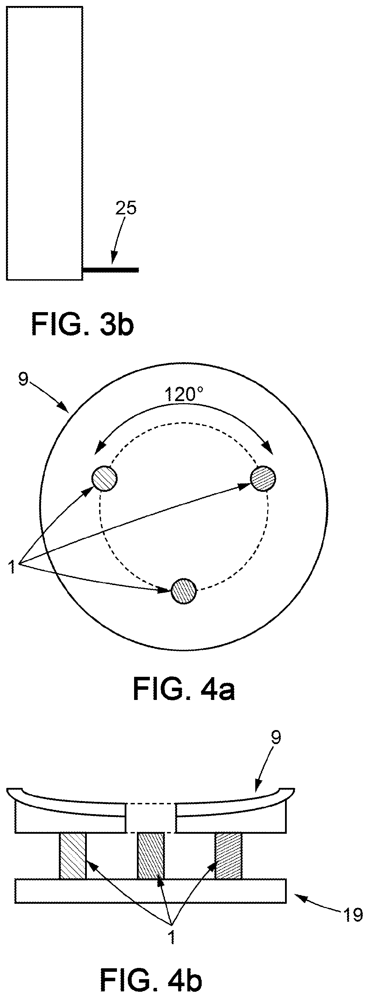

   [Fig. 3b] représente schématiquement une vue latérale du mode de réalisation de la figure 3a.
**Fig. 4a**
   [Fig. 4a] représente schématiquement un ensemble comprenant une paroi d'un équipement et plusieurs dispositifs d'ajustement de la position d'un équipement, en vue de dessous.
**Fig. 4b**
   [Fig. 4b] représente schématiquement une vue latérale de l'ensemble de la figure 4a.
**Fig. 5a**

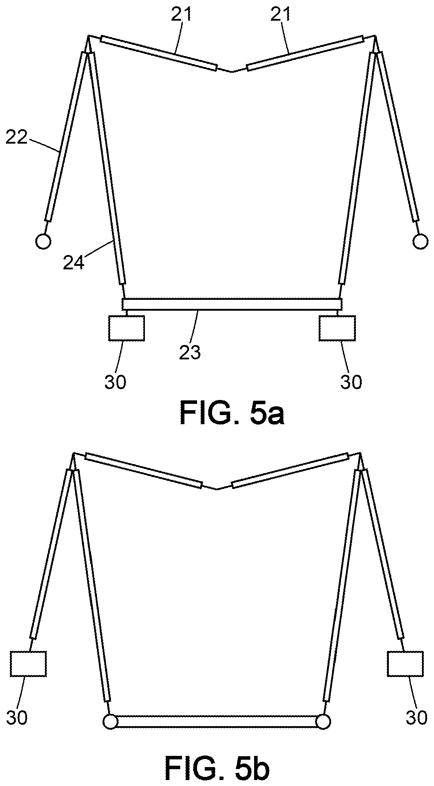

   [Fig. 5a] représente schématiquement, en vue de face, une première configuration de maintien au lancement d'un dispositif d'ajustement du positionnement d'un équipement.
**Fig. 5b**
   [Fig. 5b] représente schématiquement, en vue de face, une deuxième configuration de maintien au lancement d'un dispositif d'ajustement du positionnement d'un équipement.
Fig. 6

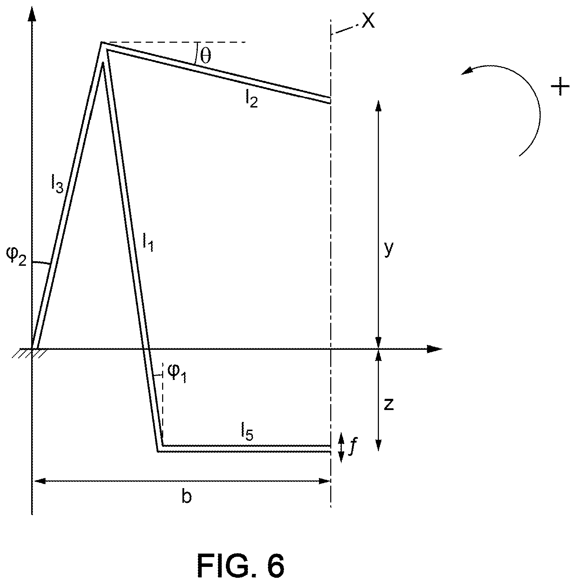

   [Fig. 6] montre les conventions utilisées pour l'analyse cinématique du dispositif en vue de face.

### Description des modes de réalisation

Il est maintenant fait référence à la figure 1 qui représente schématiquement un dispositif 1 d'ajustement en position d'un équipement 9, en particulier d'un équipement 9 spatial tel que par exemple un composant d'un télescope, par exemple un miroir d'un télescope, un prisme, ou une antenne radiofréquence.

Un ou plusieurs dispositifs 1 d'ajustement peuvent ainsi être utilisés pour ajuster la position d'un équipement 9. Dans le cas d'un unique dispositif, la position de l'équipement 9 peut être ajustée en translation. En variante, en référence aux figures 4a et 4b, qui représentent un ensemble comprenant un équipement 9 et des dispositifs 1 d'ajustement de la position de l'équipe 9, respectivement en vue de dessous et en vue latérale, trois dispositifs d'ajustement 1 peuvent être utilisés pour ajuster la position en trois points d'un équipement 9, ce qui permet d'ajuster finement une position en translation et une orientation de l'équipement selon deux axes de rotation. Dans le cas où l'équipement 9 est circulaire ou présente une symétrie axiale, les équipements sont avantageusement régulièrement répartis autour de cet axe.

De retour à la figure 1, le dispositif 1 d'ajustement en position comprend un actionneur 10, fixé sur un bâti de support 19, l'actionneur 10 étant adapté pour générer un déplacement en translation selon un axe X-X, ci-après dénommé axe central. L'actionneur 10 peut comprendre un moteur, par exemple un moteur pas à pas, générant un mouvement de rotation et un dispositif de conversion du mouvement de rotation généré par le moteur en mouvement de translation selon l'axe X-X. Dans des modes de réalisation et conformément à l'exemple représenté sur la figure 1, l'actionneur 10 peut comprendre un moto-réducteur 11 formé par un moteur pas à pas et un réducteur planétaire, entrainant un système vis-écrou 12. L'actionneur présente une résolution d'entrée déterminée, cette résolution d'entrée étant par exemple définie par le déplacement obtenu selon l'axe X-X (dans l'exemple donné ci-avant, le déplacement de l'écrou) pour un pas du moteur pas à pas. Cette résolution d'entrée peut être de plusieurs centaines de nanomètres, par exemple entre 250 à 500nm.

En outre, le dispositif 1 d'ajustement en position d'un équipement 9 comprend un étage de réduction cinématique 20, dont les bras sont dimensionnés et agencés, comme détaillé par la suite, pour avoir une résolution en sortie de plusieurs dizaines de nanomètres par exemple entre 20 et 50 nm pour la résolution en entrée entre 250 à 500nm.

L'étage de réduction cinématique 20 est également fixé au bâti, et comprend d'une part une première interface 201 de jonction avec l'équipement, au niveau de laquelle l'étage de réduction cinématique 20 est solidaire de l'équipement 9, et d'autre part une deuxième interface 202 de jonction avec l'actionneur 10, au niveau de laquelle l'étage de réduction cinématique 20 est solidaire de l'actionneur 10. Le bâti support 19 est une structure porteuse de l'équipement et du dispositif 1 d'ajustement en position. Dans le cas d'un équipement spatial, cet équipement peut être embarqué sur un engin spatial de type satellite, sonde ou station spatiale, et le bâti support peut être une structure porteuse, par exemple une paroi, de l'engin spatial.

L'étage de réduction cinématique 20 comprend un ensemble de bras articulés entre les deux interfaces de jonction 201,202 et le bâti support 19, et dont le dimensionnement et les mouvements relatifs sont configurés pour permettre, lorsque la deuxième interface se déplace selon l'axe X-X, que la première interface de jonction 201 se déplace également selon l'axe X-X, dans le même sens, et selon une amplitude réduite d'un rapport de réduction déterminé.

L'ensemble des bras articulés de l'étage de réduction cinématique 20 comprend deux bras 21 en entrée de l'étage de réduction 20, ces deux bras étant articulés l'un avec l'autre au niveau de la deuxième interface 202 de jonction avec l'actionneur 10. Par exemple, chaque bras peut être relié à la sortie de l'actionneur, cette sortie étant par exemple formée par l'écrou en translation, dans l'exemple mentionné ci-avant, et la liaison de chaque bras 21 avec la sortie de l'actionneur est articulée pour permettre l'articulation entre les deux bras. Les deux bras forment entre eux un angle obtus, c'est-à-dire compris entre 90° et 180°. De plus, les deux bras s'étendent transversalement à l'axe central X-X.

L'ensemble des bras articulés de l'étage de réduction cinématique 20 comprend également deux bras 22 latéraux externes, reliés d'une part au bâti 19 et d'autre part aux bras 21 en entrée de l'étage de réduction. Ainsi, chaque bras latéral externe 22 est relié d'une part au bâti 19 et d'autre part à une extrémité d'un des bras 21 en entrée de l'étage de réduction, à l'opposé de l'interface 202 de jonction à l'actionneur. Les bras 22 latéraux externes sont ainsi articulés d'une part avec le bâti et d'autre part avec les bras 21 en entrée de l'étage de réduction.

Comme représenté schématiquement sur les vues de face des figures 1, 2a et 2b, les bras en entrée de l'étage de réduction 21 et les bras latéraux externes 22 forment, dans une configuration neutre de l'étage de réduction cinématique, un profil en M, dont le point milieu du M correspond à l'interface 202 de jonction à l'actionneur. Dans des modes de réalisation, l'angle formé entre le bras latéral externe 22 et le bras 21 auquel il est relié est compris par exemple entre 60 et 100°. Les bras latéraux externes 22 peuvent être inclinés par rapport à l'axe central X-X de sorte que leurs extrémités reliées aux bras 21 soient plus proches de l'axe central que leurs extrémités reliées au bâti 19.

L'ensemble des bras de l'étage de réduction cinématique 20 comprend également deux bras latéraux internes 24, articulés d'une part aux jonctions entre les bras latéraux externes 22 et les bras 21 en entrée de l'étage de réduction, et d'autre part avec un bras 23 d'interface avec l'équipement 9, ce bras 23 s'étendant transversalement à l'axe central X-X et formant la première interface 201 de jonction. Chaque bras latéral interne 24 est donc relié par une extrémité à la jonction entre un bras latéral externe 22 et un bras 21 en entrée de l'étage de réduction, et par une autre extrémité à une extrémité du bras 23 d'interface, avec une articulation à chaque liaison pour permettre un mouvement relatif entre le bas latéral interne 24 et les autres bras auxquels il est relié.

Chaque bras latéral interne 24 forme un angle aigu, c'est-à-dire compris entre 0 et 90°, avec le bras 21 en entrée de l'étage de réduction et avec le bras latéral externe 22 auxquels il est relié. Dans des modes de réalisation, chaque bras latéral 24 interne forme avec le bras latéral externe 22 auquel il est relié un angle compris entre 0 et 30°, et forme avec le bras 21 en entrée de l'étage de réduction auquel il est relié un angle compris entre 60 et 90°. Dans des modes de réalisation, les bras latéraux internes 24 sont inclinés par rapport à l'axe central X-X, de sorte que leur extrémité reliée au bras 23 d'interface avec l'équipement soit plus proche de l'axe central X-X que l'extrémité opposée qui est reliée à un bras latéral externe 22 et un des bras 21 en entrée de l'étage de réduction.

On a représenté sur les figures 2a et 2b les variations de positions possibles de l'étage de réduction 20, représentées en pointillés, par rapport à une position neutre représentée en traits pleins. Le sens de déplacement de l'interface de jonction avec l'actionneur est représenté par la flèche. Ainsi, lors d'un déplacement de la deuxième interface de jonction avec l'actionneur, ce déplacement tend respectivement à augmenter (figure 2a) ou réduire (figure 2b) l'angle entre les deux bras 21 en entrée de l'étage de réduction, et donc respectivement à écarter ou rapprocher les extrémités externes des deux bras 21 l'une de l'autre. En conséquence, les bras latéraux internes 24 s'écartent ou, respectivement, se rapprochent, ce qui tend à déplacer le bras 23 d'interface avec l'équipement dans le même sens de déplacement que l'interface de jonction avec l'actionneur, et selon un rapport de réduction qui est fonction des longueurs relatives des différents bras.

Dans des modes de réalisation, afin de simplifier la cinématique du dispositif 1, le dispositif 1, et en particulier l'étage de réduction cinématique 20 sont symétriques par rapport à un plan de symétrie, l'axe central X-X étant inclus dans ce plan de symétrie. Le plan de symétrie est perpendiculaire au plan de la figure 1. Dans ce cas, les deux bras latéraux externes 22 sont de même longueur, ainsi que les deux bras latéraux internes 24, et les bras en entrée 21 de l'étage de réduction. Dans ce cas également, la deuxième interface de jonction entre les bras 21 et l'actionneur se situe dans le plan de symétrie et sur l'axe X-X, au milieu des deux bras 21 en entrée de l'étage de réduction. Enfin, le bras 23 d'interface formant l'interface avec l'équipement est également symétrique par rapport au plan de symétrie et est donc centré sur ce plan et intersecté en son milieu par l'axe X-X.

Concernant les longueurs relatives des différents bras, dans des modes de réalisation, les bras latéraux externes 22 présentent une longueur strictement inférieure à celle des bras latéraux internes 24. Puisqu'un bras latéral interne 24 est relié à un bras latéral externe 22 au niveau d'une extrémité commune, la projection, sur l'axe X-X, des articulations entre les bras latéraux externes et le bâti 19 est située entre la projection de cette extrémité commune sur l'axe X-X et le bras d'interface 23. En particulier, la projection sur l'axe X-X des articulations entre les bras latéraux externes et le bâti 19 peut être située d'une part entre la deuxième interface de jonction avec l'actionneur 10 et la portion centrale du bras 23 d'interface.

Par ailleurs, et en référence à la figure 6, en considérant la projection sur l'axe X-X des articulations des bras latéraux externes 22 avec le bâti, une distance, référencée y, entre cette projection et la deuxième interface de jonction avec l'actionneur est de préférence supérieure à deux fois la distance référencée z comprise entre cette même projection et la portion centrale du bras d'interface 23.

Dans des modes de réalisation, la distance séparant les extrémités des bras 21 en entrée de l'étage de réduction qui sont reliées aux bras latéraux 22 externes et 24 internes est strictement supérieure à la longueur du bras 23 d'interface avec l'équipement.

Dans des modes de réalisation, les bras 21, 22, 23 et 24 sont formés par des lames présentant des portions d'extrémité d'épaisseur réduite, comme schématisé à la figure 3a. Ceci permet que les bras soient rigides, mais les portions d'extrémité d'épaisseur réduite confèrent une flexibilité aux lames, permettant de former les articulations entre les bras et donc d'autoriser les déplacements relatifs entre les bras qui sont induits par les déplacements de l'actionneur. Les lames ont par exemple une épaisseur comprise entre 2,5mm à 5mm et leurs portions formant pivot ont par exemple une épaisseur comprise entre 0,5mm et 1mm. Les lames ont par exemple une largeur déterminée, comprise par exemple entre 10mm et 25mm, comme représenté à la figure 3b.

Dans des modes de réalisation, les bras 24 latéraux internes, le bras 23 d'interface, les bras 22 latéraux externes et les bras 21 en entrée de l'étage de réduction sont mono-matériau, c'est-à-dire que chaque bras est formé d'un seul matériau, par exemple du titane ou de l'acier. De préférence, l'ensemble des bras sont formés du même matériau, ce qui permet à tous les bras de présenter les mêmes caractéristiques de dilatation thermique et donc de ne pas modifier le comportement cinématique de l'étage de réduction cinématique en fonction des variations de température. Dans des modes de réalisation dans lequel un unique matériau commun est choisi pour l'ensemble des bras et dans lequel la configuration du dispositif est symétrique, l'étage de réduction cinématique obtenu est invariant avec la température, ce qui permet d'avoir un rapport de réduction constant malgré des variations de température.

Comme représenté à la [Fig. 3a] ou [Fig. 3b], le dispositif 1 d'ajustement en position d'un équipement peut comprendre une lame latérale 25, s'étendant perpendiculairement au bras 23 d'interface et perpendiculairement à l'axe central X-X. Cette lame latérale peut être reliée par une extrémité au bras d'interface 23 avec l'équipement, avantageusement sur une portion centrale de celui-ci, et par une autre extrémité au bâti support 19. On a représenté schématiquement cette lame latérale sur la figure 3a, qui représente une vue de face du dispositif 1, et sur la figure 3b, qui représente une vue de côté selon un plan parallèle au plan de symétrie, le cas échéant, du dispositif. Une telle lame latérale peut être flexible ou articulée d'une part avec le bâti et d'autre part avec le bras d'interface, pour ne pas empêcher le déplacement de l'équipement 9 au niveau du bras d'interface 23. La lame latérale 25 permet ainsi de reprendre des efforts orientés dans une direction normale au plan de symétrie, représentés par la double flèche de la figure 3a. En particulier, dans le cas d'un équipement 9 spatial faisant l'objet d'un lancement depuis la Terre, la lame latérale permet une reprise des efforts lors du lancement.

En référence aux figures 5a et 5b, dans le cas où l'équipement 9 est un équipement spatial, lancé depuis la Terre, le dispositif 1 d'ajustement en position de l'équipement peut également comprendre un équipement de maintien et de libération 30 qui est adapté pour maintenir temporairement, pour le lancement, soit le bras d'interface 23, soit les bras latéraux externes 22 de l'étage de réduction 20, et tenir les efforts au lancement induit sur cet étage de réduction. La figure 5a représente schématiquement la première configuration du dispositif de maintien et de libération 30 dans laquelle la partie mobile de l'étage de réduction cinématique, à l'interface avec l'équipement, est maintenue rigidement et les articulations des bras latéraux externes 22 vis-à-vis du bâti sont laissées libres pour permettre la reprise des efforts. La figure 5b représente schématiquement la deuxième configuration du dispositif de maintien et de libération 30 dans laquelle l'interface avec l'équipement de l'étage de réduction cinématique est libre et les articulations des bras latéraux externes 22 vis-à-vis du bâti sont maintenues rigidement. Dans les deux cas, l'étage de réduction cinématique comprend des articulations non maintenues rigidement pour permettre de tenir les efforts au lancement.

En référence à la vue de face de la figure 6, on note *l*₁ la longueur de chaque bras latéral interne 24, *l*₂ la longueur de chaque bras 21 en entrée de l'étage de réduction cinématique, *l*₃ la longueur de chaque bras latéral externe 22 et *l*₅ la demi-longueur du bras d'interface 23 avec l'équipement.

On note par ailleurs, en référence à la vue de face de la [Fig. 6], *φ*₁ l'angle formé entre un bras latéral interne 24 et l'axe X-X de déplacement, *φ*₂ l'angle formé entre l'angle formé entre un bras latéral externe 24 et l'axe X-X de déplacement, et θ l'angle formé entre un bras 21 en entrée de l'étage de réduction et un axe perpendiculaire à l'axe X-X de déplacement.

On note également, en référence à la vue de face de la [Fig. 6], y la distance entre l'interface de jonction avec l'actionneur et la projection, sur l'axe X-X, de l'articulation entre le bras latéral externe 22 avec le bâti; z la distance entre l'interface de jonction avec l'équipement et la projection, sur l'axe X-X, de l'articulation entre le bras latéral externe 22 avec le bâti ; et b la distance entre l'articulation entre le bras latéral externe 22 avec le bâti et l'axe X-X de déplacement.

Enfin, en référence à la vue de face de la [Fig. 6], on note f la course maximale de l'interface de jonction avec l'équipement, correspondant aux déplacements extrêmes de l'actionneur 10. Sans rentrer dans les détails de la mise en équation, on comprend qu'on peut régler le rapport de réduction en réglant les longueurs des bras. Lors d'un déplacement de l'interface avec l'actionneur, l'augmentation ou respectivement la diminution de θ entraine l'augmentation ou respectivement la diminution de *φ*₂ pour provoquer un déplacement du bras d'interface 23 dans un sens ou dans l'autre. En outre le fait notamment de placer les bras latéraux internes et l'interface avec l'équipement en dessous du M, permet des débattements répondant aux objectifs de précision et de course linéaire en sortie visés. Les bras latéraux internes sont par exemple de plus grande longueur que les bras latéraux externes.

La résolution obtenue peut ainsi être inférieure à 25 nm et est même inférieure à 10nm notamment sur une partie de la course d'entrée de l'actionneur et la course maximale en sortie du dispositif peut avantageusement être supérieure à 500 µm par exemple pour une course d'entrée entre 5mm et 20mm. Par ailleurs, pour une configuration géométrique déterminée, même si le rapport de réduction n'est pas constant, le rapport de réduction reste connu à l'avance et permet ainsi l'utilisation avantageuse de l'invention.

La structure selon l'invention comprend notamment une paire d'articulations reliant chacune un bras 21 de liaison avec l'actionneur, un bras 22 articulé par ailleurs avec le bâti et un bras 24 de liaison avec l'interface de l'équipement, permettant ainsi une cinématique particulière et avantageuse par rapport à l'art antérieur.

## Revendications

1. Dispositif (1) d'ajustement en position adapté pour un équipement (9) spatial, comprenant :
- un actionneur (10) fixé sur un bâti de support (19) adapté pour générer un déplacement en translation selon un axe central (X-X) et
- un étage de réduction cinématique (20) fixé au bâti (19) et comprenant une première interface (201) de jonction à l'équipement,
**caractérisé en ce que** l'étage de réduction cinématique (20) comprend :
- deux bras (21) en entrée de l'étage de réduction articulés l'un avec l'autre au niveau d'une deuxième interface de jonction avec l'actionneur, les deux bras (21) en entrée de l'étage de réduction formant entre eux un angle obtus,
- deux bras (22) latéraux externes articulés d'une part avec le bâti (19) et d'autre part avec les deux bras (21) en entrée de l'étage de réduction et
- deux bras (24) latéraux internes articulés d'une part aux jonctions entre les bras (22) latéraux externes et les bras (21) en entrée de l'étage de réduction et d'autre part avec un bras (23) d'interface disposé transversalement à l'axe central (X-X) pour former la première interface de jonction à l'équipement, chaque bras (24) latéral interne formant un angle aigu avec un des bras (21) en entrée de l'étage de réduction et avec un des bras (22) latéraux externes,
l'étage de réduction cinématique étant dimensionné de sorte qu'un déplacement de la deuxième interface de jonction avec l'actionneur selon l'axe central, dans un sens et selon une amplitude provoque un déplacement du bras (23) d'interface selon l'axe central, dans le même sens et selon ladite amplitude réduite d'un rapport de réduction qui est fonction des longueurs relatives des bras appartenant à l'étage de réduction cinématique.

2. Dispositif selon la revendication 1, dans lequel les bras (21) en entrée de l'étage de réduction et les bras (22) latéraux externes forment un profil en M.

3. Dispositif selon la revendication 1 ou 2, dans lequel la projection, sur l'axe central, des articulations des bras (22) latéraux externes avec le bâti (19) est disposée entre d'une part la deuxième interface de jonction avec l'actionneur et d'autre part une portion centrale du bras (23) d'interface.

4. Dispositif selon la revendication 3, dans lequel lorsqu'on considère la projection, sur l'axe central, des articulations des bras (22) latéraux externes avec le bâti (19), une distance (y) prise entre cette projection et la deuxième interface de jonction avec l'actionneur est supérieure à deux fois une distance (z) prise entre cette projection et la portion centrale du bras (23) d'interface.

5. Dispositif selon l'une des revendications précédentes, dans lequel les bras, appartenant à l'étage de réduction cinématique, qui se terminent par des articulations, sont constitués chacun par une lame dont des portions à ses deux extrémités présentent une épaisseur réduite.

6. Dispositif selon l'une des revendications précédentes, dans lequel l'étage de réduction cinématique présente un plan de symétrie, l'axe central (X-X) étant disposé dans ce plan de symétrie.

7. Dispositif selon l'une des revendications précédentes, dans lequel les bras (24) latéraux internes sont inclinés par rapport à l'axe central, de façon à ce que leur extrémité reliée au bras (23) d'interface soit plus proche de l'axe central (X-X) que leur extrémité reliée à la jonction entre un des bras (22) latéraux externes et un des bras (21) en entrée de l'étage de réduction.

8. Dispositif selon l'une des revendications précédentes, dans lequel la longueur des bras (22) latéraux externes est strictement inférieure à la longueur des bras (24) latéraux internes.

9. Dispositif selon l'une des revendications précédentes, dans lequel le bras (23) d'interface est en outre relié au bâti (19) par une lame flexible (25) s'étendant perpendiculairement au bras (23) d'interface et perpendiculairement à l'axe central.

10. Dispositif selon l'une des revendications précédentes, dans lequel les bras (24) latéraux internes, le bras (23) d'interface, les bras (22) latéraux externes et les bras (21) en entrée de l'étage de réduction sont mono matériau.

11. Dispositif selon l'une des revendications précédentes, pour l'ajustement de la position d'un équipement spatial (9), dans lequel le dispositif comprend en outre un équipement de maintien et de libération adapté pour maintenir temporairement le bras (23) d'interface ou les bras (22) latéraux externes.

12. Ensemble, comprenant au moins un équipement (9) spatial optique ou radiofréquence et au moins trois dispositifs (1) selon l'une des revendications précédentes, pour un ajustement de la position, en au moins trois points, de chaque équipement spatial.

13. Ensemble selon la revendication 12, dans lequel l'équipement spatial est un équipement optique se présentant sous la forme d'un prisme ou d'un miroir.

14. Ensemble selon la revendication 12, dans lequel l'équipement spatial est un équipement radiofréquence se présentant sous la forme d'une antenne.

## Patentansprüche

1. Positionseinstellvorrichtung (1), die für eine Raumfahrtausrüstung (9) geeignet ist, umfassend:
- einen Aktor (10), der an einem Tragrahmen (19) befestigt ist, der geeignet ist, eine Translationsverschiebung entlang einer Mittelachse (X-X) zu erzeugen, und
- eine kinematische Untersetzungsstufe (20), die am Rahmen (19) befestigt ist und eine erste Verbindungsschnittstelle (201) zur Ausrüstung umfasst,
**dadurch gekennzeichnet, dass** die kinematische Untersetzungsstufe (20) umfasst:
- zwei Eingangsarme (21) der Untersetzungsstufe, die an einer zweiten Verbindungsschnittstelle mit dem Aktor gelenkig miteinander verbunden sind, wobei die beiden Eingangsarme (21) der Untersetzungsstufe zwischen sich einen stumpfen Winkel bilden,
- zwei äußere Seitenarme (22), die einerseits mit dem Rahmen (19) und andererseits mit den beiden Eingangsarmen (21) der Untersetzungsstufe gelenkig verbunden sind, und
- zwei innere Seitenarme (24), die einerseits an den Verbindungsstellen zwischen den äußeren Seitenarmen (22) und den Eingangsarmen (21) der Untersetzungsstufe und andererseits mit einem Schnittstellenarm (23) gelenkig verbunden sind, der quer zur Mittelachse (X-X) angeordnet ist, um die erste Verbindungsschnittstelle zur Ausrüstung zu bilden, wobei jeder innere Seitenarm (24) einen spitzen Winkel mit einem der Eingangsarme (21) der Untersetzungsstufe und mit einem der äußeren Seitenarme (22) bildet,
wobei die kinematische Untersetzungsstufe so bemessen ist, dass eine Verschiebung der zweiten Verbindungsschnittstelle mit dem Aktor entlang der Mittelachse in einer Richtung und mit einer Amplitude eine Verschiebung des Schnittstellenarms (23) entlang der Mittelachse in derselben Richtung und mit der genannten Amplitude, reduziert um ein Untersetzungsverhältnis, das von den relativen Längen der zur kinematischen Untersetzungsstufe gehörenden Arme abhängt, bewirkt.

2. Vorrichtung nach Anspruch 1, wobei die Eingangsarme (21) der Untersetzungsstufe und die äußeren Seitenarme (22) ein M-Profil bilden.

3. Vorrichtung nach Anspruch 1 oder 2, wobei die Projektion der Gelenke der äußeren Seitenarme (22) mit dem Rahmen (19) auf die Mittelachse zwischen einerseits der zweiten Verbindungsschnittstelle mit dem Aktor und andererseits einem mittleren Abschnitt des Schnittstellenarms (23) angeordnet ist.

4. Vorrichtung nach Anspruch 3, wobei, wenn die Projektion der Gelenke der äußeren Seitenarme (22) mit dem Rahmen (19) auf die Mittelachse betrachtet wird, ein Abstand (y), der zwischen dieser Projektion und der zweiten Verbindungsschnittstelle mit dem Aktor genommen wird, größer ist als das Zweifache eines Abstands (z), der zwischen dieser Projektion und dem mittleren Abschnitt des Schnittstellenarms (23) genommen wird.

5. Vorrichtung nach einem der vorhergehenden Ansprüche, wobei die Arme, die zur kinematischen Untersetzungsstufe gehören und in Gelenken enden, jeweils aus einer Lamelle bestehen, deren Abschnitte an ihren beiden Enden eine reduzierte Dicke aufweisen.

6. Vorrichtung nach einem der vorhergehenden Ansprüche, wobei die kinematische Untersetzungsstufe eine Symmetrieebene aufweist, wobei die Mittelachse (X-X) in dieser Symmetrieebene angeordnet ist.

7. Vorrichtung nach einem der vorhergehenden Ansprüche, wobei die inneren Seitenarme (24) in Bezug auf die Mittelachse geneigt sind, so dass ihr mit dem Schnittstellenarm (23) verbundenes Ende näher an der Mittelachse (X-X) liegt als ihr mit der Verbindungsstelle zwischen einem der äußeren Seitenarme (22) und einem der Eingangsarme (21) der Untersetzungsstufe verbundenes Ende.

8. Vorrichtung nach einem der vorhergehenden Ansprüche, wobei die Länge der äußeren Seitenarme (22) streng kleiner ist als die Länge der inneren Seitenarme (24).

9. Vorrichtung nach einem der vorhergehenden Ansprüche, wobei der Schnittstellenarm (23) außerdem mit dem Rahmen (19) durch eine flexible Lamelle (25) verbunden ist, die sich senkrecht zum Schnittstellenarm (23) und senkrecht zur Mittelachse erstreckt.

10. Vorrichtung nach einem der vorhergehenden Ansprüche, wobei die inneren Seitenarme (24), der Schnittstellenarm (23), die äußeren Seitenarme (22) und die Eingangsarme (21) der Untersetzungsstufe aus einem einzigen Material bestehen.

11. Vorrichtung nach einem der vorhergehenden Ansprüche, für die Positionseinstellung einer Raumfahrtausrüstung (9), wobei die Vorrichtung ferner eine Halte- und Freigabevorrichtung umfasst, die geeignet ist, den Schnittstellenarm (23) oder die äußeren Seitenarme (22) vorübergehend zu halten.

12. Anordnung, umfassend mindestens eine optische oder Hochfrequenz-Raumfahrtausrüstung (9) und mindestens drei Vorrichtungen (1) nach einem der vorhergehenden Ansprüche, für eine Positionseinstellung an mindestens drei Punkten jeder Raumfahrtausrüstung.

13. Anordnung nach Anspruch 12, wobei die Raumfahrtausrüstung eine optische Ausrüstung in Form eines Prismas oder eines Spiegels ist.

14. Anordnung nach Anspruch 12, wobei die Raumfahrtausrüstung eine Hochfrequenzausrüstung in Form einer Antenne ist.

## Claims

1. A position adjustment device (1) suitable for space equipment (9), comprising:
- an actuator (10) fixed to a support frame (19) adapted to generate a translational displacement along a central axis (X-X) and
- a kinematic reduction stage (20) fixed to the frame (19) and comprising a first connection interface (201) to the equipment,
**characterized in that** the kinematic reduction stage (20) comprises:
- two input arms (21) of the reduction stage articulated with each other at a second connection interface with the actuator, the two input arms (21) of the reduction stage forming an obtuse angle between them,
- two external lateral arms (22) articulated on the one hand with the frame (19) and on the other hand with the two input arms (21) of the reduction stage and
- two internal lateral arms (24) articulated on the one hand at the junctions between the external lateral arms (22) and the input arms (21) of the reduction stage and on the other hand with an interface arm (23) disposed transversely to the central axis (X-X) to form the first connection interface to the equipment, each internal lateral arm (24) forming an acute angle with one of the input arms (21) of the reduction stage and with one of the external lateral arms (22),
the kinematic reduction stage being dimensioned such that a displacement of the second connection interface with the actuator along the central axis, in one direction and with a certain amplitude, causes a displacement of the interface arm (23) along the central axis, in the same direction and with said amplitude reduced by a reduction ratio which is a function of the relative lengths of the arms belonging to the kinematic reduction stage.

2. The device according to claim 1, wherein the input arms (21) of the reduction stage and the external lateral arms (22) form an M-shaped profile.

3. The device according to claim 1 or 2, wherein the projection, on the central axis, of the articulations of the external lateral arms (22) with the frame (19) is disposed between, on the one hand, the second connection interface with the actuator and, on the other hand, a central portion of the interface arm (23).

4. The device according to claim 3, wherein when considering the projection, on the central axis, of the articulations of the external lateral arms (22) with the frame (19), a distance (y) taken between this projection and the second connection interface with the actuator is greater than twice a distance (z) taken between this projection and the central portion of the interface arm (23).

5. The device according to any one of the preceding claims, wherein the arms, belonging to the kinematic reduction stage, which terminate in articulations, are each constituted by a blade, portions of which at its two ends have a reduced thickness.

6. The device according to any one of the preceding claims, wherein the kinematic reduction stage has a plane of symmetry, the central axis (X-X) being disposed in this plane of symmetry.

7. The device according to any one of the preceding claims, wherein the internal lateral arms (24) are inclined with respect to the central axis, such that their end connected to the interface arm (23) is closer to the central axis (X-X) than their end connected to the junction between one of the external lateral arms (22) and one of the input arms (21) of the reduction stage.

8. The device according to any one of the preceding claims, wherein the length of the external lateral arms (22) is strictly less than the length of the internal lateral arms (24).

9. The device according to any one of the preceding claims, wherein the interface arm (23) is furthermore connected to the frame (19) by a flexible blade (25) extending perpendicularly to the interface arm (23) and perpendicularly to the central axis.

10. The device according to any one of the preceding claims, wherein the internal lateral arms (24), the interface arm (23), the external lateral arms (22) and the input arms (21) of the reduction stage are of a single material.

11. The device according to any one of the preceding claims, for the position adjustment of space equipment (9), wherein the device further comprises holding and release equipment adapted to temporarily hold the interface arm (23) or the external lateral arms (22).

12. An assembly, comprising at least one optical or radiofrequency space equipment (9) and at least three devices (1) according to any one of the preceding claims, for a position adjustment, at at least three points, of each space equipment.

13. he assembly according to claim 12, wherein the space equipment is an optical equipment in the form of a prism or a mirror.

14. The assembly according to claim 12, wherein the space equipment is a radiofrequency equipment in the form of an antenna.
